## Europäisches Patentamt
## European Patent Office
## Office européen des brevets

(11) Veröffentlichungsnummer: **0 070 987**
**B1**

(12) # EUROPÄISCHE PATENTSCHRIFT

(45) Veröffentlichungstag der Patentschrift:
04.02.87

(51) Int. Cl.⁴: **B 23 B 31/16**

(21) Anmeldenummer: **82104338.7**

(22) Anmeldetag: **18.05.82**

(54) **Kraftbetätigtes Spannfutter.**

(30) Priorität: **24.07.81 DE 3129249**

(43) Veröffentlichungstag der Anmeldung:
**09.02.83 Patentblatt 83/6**

(45) Bekanntmachung des Hinweises auf die Patenterteilung:
**04.02.87 Patentblatt 87/6**

(84) Benannte Vertragsstaaten:
**AT FR GB IT SE**

(56) Entgegenhaltungen:
**DE-A-2 240 871**
**FR-A-2 228 572**
**GB-A-1 287 968**
**GB-A-2 000 456**

(73) Patentinhaber: **Paul Forkardt GmbH & Co. KG,
Rosenstrasse 44- 46, D-4000 Düsseldorf 1 (DE)**

(72) Erfinder: **Steinberger, Josef, Ing.grad.,
Sebastiansweg 30, D-4000 Düsseldorf (DE)**
Erfinder: **Beckers, Heinrich, Zeppelinstrasse 60,
D-4060 Viersen 11 (DE)**

(74) Vertreter: **Patentanwälte Dipl.- Ing. Alex Stenger
Dipl.- Ing. Wolfram Watzke Dipl.- Ing. Heinz J.
Ring, Kaiser- Friedrich- Ring 70, D-4000 Düsseldorf
11 (DE)**

EP 0 070 987 B1

LIBER, STOCKHOLM 1987

## Beschreibung

Die Erfindung betrifft ein kraftbetätigtes Spannfutter mit mehreren in einem Futterkörper radial verschiebbar geführten Spannbacken, die durch ein im Futterkörper verschiebbar geführtes Stellglied betätigbar sind, sowie mit Backensicherungen, die jeweils einen in eine Aussparung der Spannbacke eingreifenden Haltestift umfassen, der durch ein formschlüssig an ihm angreifendes, von Hand betätigbares Riegelglied aus der Aussparung zurückzeinbar ist, wobei jedes Riegelglied im Arbeitsbereich des Stellgliedes unmittelbar auf einer Oberfläche des Stellgliedes abgestützt und bei in eine Entkupplungsstellung überführtem Stellglied entgegen der Kraft einer Rückstellfeder in eine Vertiefung im Stellglied bzw. in einen vom Stellglied freigegebenen Raum eindrückbar ist.

Ein kraftbetätigtes Spannfutter der voranstehend beschriebenen Art ist aus der GB-A-1 287 968 bekannt. Bei dieser bekannten Konstruktion ist der jeweils in eine Spannbacke eingreifende Haltestift vorgesehen, um die zugehörige Spannbacke im Futterkörper zu halten, wenn die aufgrund einer Schrägverzahnung hergestellte Kupplung zwischen Stellglied und Spannbacke aufgehoben ist. Soll in dieser Stellung die Spannbacke aus dem Futterkörper herausgenommen werden, muß das Riegelglied in radialer Richtung nach außen gezogen werden, wodurch das Riegelglied über seine Schrägfläche den Haltestift entgegen der Kraft einer Feder aus der Verzahnung der Spannbacke zurückzieht, so daß diese in radialer Richtung aus dem Fütterkörper herausgenommen werden kann.

Bei der aus der GB-A-1 287 968 vorbekannten Konstruktion dienen die Backeinsicherungen demgemäß zum Festhalten der Spannbacken in der Entkupplungsstellung der Stellglieder. Die Backensicherungen ergeben damit keine Sicherheit gegen Herausschleudern der Spannbacken aus dem Futterkörper ber umlaufendem Spannfutter. Außerdem besteht der Nachteil, daß der Haltestift durch die Kraft einer Feder im Eingriff mit der Spannbacke gehalten wird; bei einem Bruch dieser Feder oder bei einem Verklemmen des Haltestiftes tritt somit keine Sicherrungswirkung ein.

Der Erfindung liegt die Aufgabe zugrunde, für ein kraftbetätigtes Spannfutter der eingangs beschriebenen Art eine Backensicherung zu schaffen, welche aus einfachen und robusten Bauteilen besteht und eine zwangsläufige, durch Formschluß erzielte Sicherung der Spannbacken durch den Haltenstift der Backensicherung in Abhängigkeit von der Stellung des die Spannbacken betätigenden Stellgliedes bewirkt.

Die Lösung dieser Aufgabenstellung durch die Erfindung ist dadurch gekennzeichnet, daß der Haltestift im Arbeitsbereich des Stellgliedes durch das Riegelglied formschlüssig ein seine in die Aussparung der Spannbacke eingreifende Verriegelungsstellung zwangsüberführt und in der Entkupplungsstellung des Stellgliedes durch Betätigen des Riegelgliedes von Hand aus der Aussparung zurückziehbar ist.

Die erfindungsgemäße Konstruktion dient somit nicht nur dem Festhalten der jeweiligen Spannbacke im Futterkörper in der Entkupplungsstellung des Stellgliedes, sondern insbesondere einer Sicherung der Spannbacke gegen Herausfliegen aus dem Futterkörper, wenn sich das Stellglied in der Arbeitsstellung befindet und durch einen Bruch des Getriebes zwischen Stellglied und Spannbacke die Gefahr besteht, daß die hierdurch vom Stellglied entkuppelte Spannbacke bei umlaufendem Futterkörper aus diesem herausgeschleudert wird.

Auch bei einem aus der GB-A-2 000 456 bekannten Spannfutter besitzen die aus einem Haltestift und einem Riegelglied bestehenden Backensicherungen den Nachteil, daß sie von der Funktionstüchtigkeit eines Steuergliedes abhängen, welches durch die Kraft einer Feder betätigt wird. Bei einem Bruch dieser Feder oder einem Verklemmen des Steuergliedes erfolgt keine Sicherung der Spannbacke, so daß diese aus dem Futterkörper herausfliegen kann, wenn sich die Spannbacken nicht im Eingriff mit dem Stellglied befinden und das Spannfutter aus Versehen in Umdrehungen versetzt wird. Da die Beweglichkeit des Steuergliedes auch durch Staub oder Kühlmedium beeinträchtigt werden kann, ist die Funktion der aus der GB-A-2 000 456 bekannten Backensicherungen auch dann gefährdet, wenn kein Bruch der Feder eintritt. Einer Erhöhung der Sicherheit durch Vergrößern der Federkraft steht entgegen, daß die Kraft dieser Feder bei einer beabsichtigten Aufhebung der Backensicherung zum Auswechseln der Spannbacken durch Daumendruck überwunden werden muß, so daß die Federkraft eine übliche Daumenkraft nicht übersteigen darf.

Mit der erfindungsgemäßen Ausbildung der Backensicherungen wird erreicht, daß deren formschlüssig mit dem Haltestift verbundenes Riegelglied unmittelvar vom axial verschiebbar im Futterkörper geführten Stellglied betätigt wird, so daß insgesamt eine direkte und formschlüssige Betätigung der Backensicherungen erfolgt, die nur in einer bestimmten Stellung des Stellgliedes, in der ein Herausnehmen der Spannbacken zulässig ist, durch Eindrücken des Riegelgliedes von Hand entweder in Vertiefungen des Stellgliedes oder in einem vom Stellglied freigegebenen Raum aufgehoben werden kann. Auf dieser Weise entfallen die Funktionssicherheit beeinträchtigende Federn und Steuerglieder, da die Rückstellfeder lediglich dafür vorgesehen ist, das Riegelglied nach seinen Eindrücken in die Ausgangslage zurückzuführen, obwohl diese Rückfühung bei einer Axialverschiebung des Stellgliedes auch formschlüssig erzielt wird.

Gemäß einem bevorzugten Merkmal der Erfindung durchdringt das Riegelglied den Haltestift mit einem zylindrischen Mittelabschnitt, an den sich zu beiden Seiten kegelstumpfartige SSteureflächen anschließen, von denen die radial innenliegende den Haltestift in der Verriegelunsstellung über entsprechend ausgebildete Gegenflächen formschlüssig in seiner vorderen Endlage festhält und von denen die radial außenliegende den Haltestift bei einer Betätigung des Riegelgledes von Hand über eine als Schrägfläche ausgebildete Gegenfläche aus der Aussparung der Spannbacke zurückzeiht.

Hierdurch wird eine Backensicherung aus wenigen und einfach herzustellenden Bauteilen geschaffen, so daß sich nicht nur eine preiswert herzustellende Konstruktion, sondern auch eine hohe Funktionssicherheit ergibt. Gemäß einem weiteren Merkmal der Erfindung kann am Haltestift eine die Eindrückbewegung des Riegelgliedes begrenzende Anschlagfläche ausgebildet sein, wodurch ein zu tiefes Eindrücken des Riegelgliedes verhindert wird.

Mit der Erfindung wird weiterhin vorgeschlagen, die Rückstellfeder in Verlängerung des Haltestiftes anzuordnen. Hierdurch ergibt sich zwar nur eine mittelbare Federbelastung des Riegelgliedes; es ist jedoch eine günstige und raumsparende Unterbringung der Rückstellfeder möglich.

Bei einer bevorzugten Ausführungsform der Erfindung ist das Riegelglied einstückig ausgebildet und vom Haltestift durchdrungen, der mehrteilig ausgeführt ist. Weiterhin kann das Stellglied mit jeweils einer Steuerschräge für die einzelnen Riegelglieder versehen sein.

Bei einem axial verschiebbar im Futterkörper geführten, für alle Spannbacken gemeinsamen Stellglied ist erfindungsgemäß jedes Riegelglied in Umfangsrichtung des Futterkörpers seitlich neben und etwa parallel zur Spannbacke angeordnet und unmittelbar auf der zylindrischen Mantelfläche des die Spannbacken über Keilflächen antreibenden Futterkolbens abgestützt. Der Futterkolben kann hierbei in einem außerhalb sienes Arbeitshubes liegenden Bereich mit jeweils einer Vertiefung für die Riegelglieder versehen sein. Auf diese Weise wird eine raumsparende Unterbringung und einfache Ausbildung der Backensicherungen erzielt, die außerdem an vorhandenen Spannfuttern nachträglich angebracht werden können. Durch die im Futterkolben außerhalb seines Arbeitshubes ausgebildeten Vertiefungen können die Riegelglieder nur dann betätigt werden, wenn der Futterkolben bewußt in eine Außereingriffstellung mit den Spannbacken verschoben worden ist.

Auf der Zeichnung ist eine Ausführungsbeispiel des erfindungsgemäßen Spannfutters dargestellt, und zwar zeigen:

Fig. 1 eine teilweise Stirnansicht eines Spannfutters mit einem Teilschnitt und

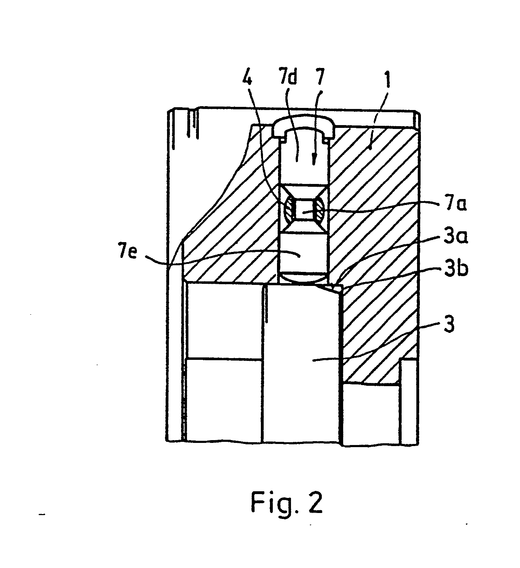

Fig. 2 einen Sekantialschnitt gemäß der Schnittlinie II-II in Fig. 1.

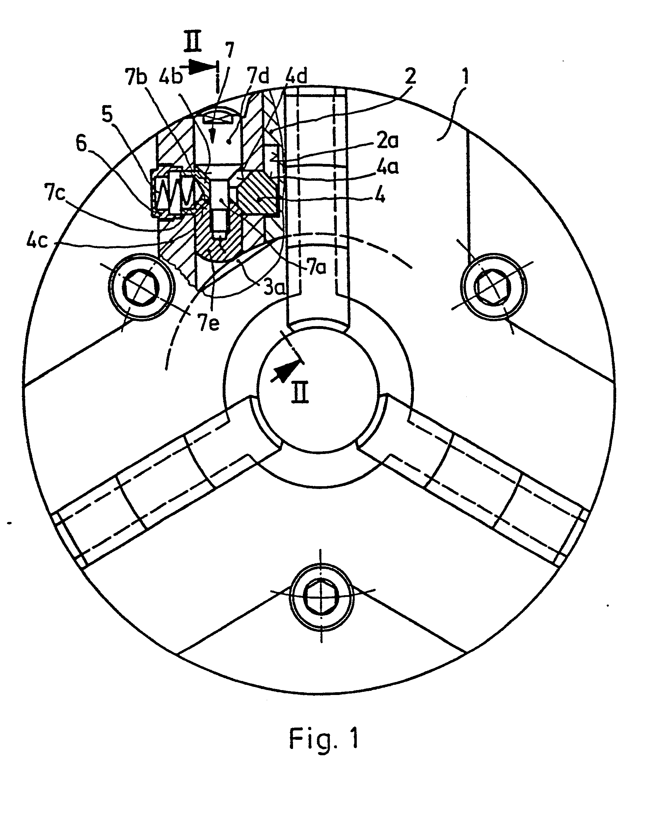

Das als Ausführungsbeispiel dargestellte Spannfutter besitzt einen Futterkörper 1, in welchem drei Spannbacken 2 radial verschiebbar geführt sind. Von diesen Spannbacken 2 ist lediglich die obere Spannbacke in Fig. 1 dargestellt. Die beiden unteren sind in Fig. 1 nicht dargestellt. Die Spannbacken 2 werden gemeinsam durch ein im Futterkörper 1 axial verschiebbar geführtes Stellglied 3 betätigt, welches beim Ausführungsbeispiel als Futterkolben mit Keilaufnahmen ausgebildet ist, in welche entsprechende Keilhaken der Spannbacken 2 derart eingreifen, daß bei einer Axialbewegung des Stellgliedes 3 eine Radialbewegung der Spannbacken 2 erfolgt.

Um bei einem Entkuppeln der Spannbacken 2 vom Stellglied 3 oder bei einem Bruch des Keilhakengetriebes ein Herausschleudern der Spannbacken 2 aus dem Futterkörper 1 zu verhindern, ist jeder Spannbacke 2 eine Backensicherung zugeordnet. Diese Backensicherungen umfassen jeweils einen in eine seitliche Aussparung 2a der Spannbacke 2 eingreifenden Haltestift 4, der in einer tangential ausgerichteten Querbohrung des Futterkörpers 1 verschiebbar gelagert ist. Dieser Haltestift 4 ist durch eine Rückstellfeder 5 in Richtung auf die Spannbacke 2 belastet. Diese als Druckfeder ausgebildete Rückstellfeder 5 ist beim Ausführungsbeispiel zwischen einer Anbohrung im Haltestift 4 und einer Gewindebüchse 6 angeordnet, welche die Querbohrung im Futterkörper 1 abschließt. Um ein selbsttätiges Zurückdrücken des Haltestiftes 4 bei einem Einsetzen der Spannbacke 2 in den Futterkörper 1 zu erzielen, besitzt der Haltestift 4 eine Abschrägung 4a, die am besten in Fig. 1 zu erkennen ist.

Zum Zurückziehen des Haltestiftes 4 aus der Aussparung 2a der Spannbacke 2 wirkt dieser formschlüssig mit einem Riegelglied 7 zusammen, welches den Haltestift 4 bei der dargestellten Ausführungsform mit einem zylindrischen Mittelabschnitt 7a durchdringt. An diesen Mittelabschnitt 7a schließen sich zu beiden Seiten kegelstumpfartige Steuerflächen 7b, 7c an, welche an einem äußeren Betätigungsteil 7d bzw. einem inneren Steuerteil 7e ausgebildet sind. Diese Steuerflächen 7b bzw. 7c wirken mit entsprechenden Gegenflächen 4b bzw. 4c des Haltestiftes 4 zusammen.

Über die radial innenliegenden Gegenflächen 4c wird der Haltestift 4 von den Steuerflächen 7c des Riegelgliedes 7 in seiner in die Aussparung 2a der Spannbacke 2 überfürten Verriegelungsstellung formschlüssig festgehalten, wie dies besonders gut die Fig. 1 erkennen läßt. Diese Verriegelungsstellung wird dadurch erreicht, daß der Steuerteil 7e des Riegelgliedes 7 unmittelbar auf der mit einer Steuerschräge 3a versehenen Oberfläche des Stellgliedes 3 abgestützt ist und auf diese weise den Haltestift 4 in die Aussparung 2a der Spannbacke 2 drückt, Die Überführung des Haltestiftes 4 mittels des formschlüssig an ihm angreifenden Riegelgliedes 7 in die Verriegelungsstellung erfolgt somit unmittelbar vom Stellglied 3.

Um die Spannbacken 2 aus dem Futterkörper 1 herausnehmen zu können, besitzt das Stellglied 3 für jedes Riegelglied 7 eine Vertiefung 3b, in welche das Riegelglied 7 entgegen der Kraft der Rückstellfeder 5 durch Niederdrücken seines Betätigungsteiles 7d von Hand eindrückbar ist. Hierbei drückt die Steuerfläche 7b am Betätigungsteil 7d des Riegelgliedes 7 über die Gegenfläche 4b den Haltestift 4 entgegen der Kraft der Rückstellfeder 5 zurück, so daß sein vorderes Ende aus der Aussparung 2a der Spannbacke 2 zurückgezogen wird. Die Spannbacke 2 kann nunmehr radial nach außen aus dem Futterkörper 1 herausgezogen werden. Sobald das Betätigungsteil 7d des Riegelgliedes 7 losgelassen wird, führt die Rückstellfeder 5 den Haltestift 4 in die in Fig. 1 gezeichnete Verriegelungsstellung zurück. Über seine Abschrägung 4a wird der Haltestift 4 unter Mitnahme des Riegelgliedes 7 zurückgedrückt, wenn anschließend eine neue Spannbacke 2 in die entsprechende Radialführung des Futterkörpers 1 von außen her eingeschoben wird.

Damit die Eindrückbewegung des Riegelgliedes 7 begrenzt ist, weist der Haltestift 4 eine Anschlagfläche 4d auf, an welcher die Steuerfläche 7b des Riegelgliedes 7 zur Anlage kommt.

Anstelle der auf der Zeichnung dargestellten Ausführung, bei welcher der Haltestift 4 einteilig und das Riegelglied 7 mehrteilig ausgebildet sind, kann auch eine Konstruktion gewählt werden, bei welcher das Riegelglied 7 einstückig ausgebildet und vom Haltestift 4 durchdrungen ist, der mehrteilig ausgeführt ist.

Bezugsziffernliste:
1 Futterkörper
2 Spannbacke
2a Aussparung
3 Stellglied (Futterkolben)
3a Steuerschräge
3b Vertiefung
4 Haltestift
4a Abschrägung
4b Gegenfläche
4c Gegenfläche
4d Anschlagfläche
5 Rückstellfeder
6 Gewindebüchse
7 Riegelglied
7a Mittelabschnitt
7b Steuerfläche
7c Steuerfläche
7d Betätigungsteil
7e Steuerteil

**Patentansprüche**

1. Kraftbetätigtes Spannfutter mit mehreren in einem Futterkörper (1) radial verschiebbar geführten Spannbacken (2), die durch ein im Futterkörper (1) verschiebbar geführtes Stellglied (3) betätigbar sind, sowie mit Backensicherungen, die jeweils einen in eine Aussparung (2a) der Spannbacke (2) eingreifenden Haltestift (4) umfassen, der durch ein formschlüssig an ihm angreifendes, von Hand bettätigbares Riegelglied (7) aus der Aussparung (2a) zurückzeihbar ist, wobei jedes Riegelglied (7) im Arbeitsbereich des Stellgliedes (3) unmittelbar auf einer Oberfläche des Stellgliedes (3) abgestützt und bei in eine Entkupplungsstellung überführtem Stellglied (3) entgegen der Kraft einer Rückstellfeder (5) in eine Vertiefung (3b) im Stellglied (3) bzw. in einem vom Stellglied (3) freigegebenen Raum eindrückbar ist,
dadurch gekennzeichnet,
daß der Haltestift (4) im Arbeitsbereich des Stellgliedes (3) durch das Riegelglied (7) formschlüssig in seine in die Aussparung (2a) der Spannbacke (2) eingreifende Verriegelungsstellung zwangsüberführt und in der Entkupplungsstellung des Stellgliedes (3) durch Betätigen des Riegelgliedes (7) von Hand aus der Aussparung (2a) zurückziehbar ist.

2. Spannfutter nach Anspruch 1, dadurch gekennzeichnet, daß das Riegelglied (7) den Haltestift (4) mit einem zylindrischen Mittelabschnitt (7a) durchdringt, an den sich zu bieden Seiten kegelstumpfarige Steuerflächen (7b, 7c) anschließen, von denen die radial innenliegende (7c) den Haltestift (4) in der Verriegelunsstellung über entsprechend ausgebildete Gegenflächen (4c) formschlüssig in seiner vorderen Endlage festhält und von denen die radial außenliegende (7b) den Haltestift (4) bei einer Betätigung des Riegelgliedes (7) von Hand über eine als Schrägfläche ausgelbildete Gegenfläche (4b) aus der Aussparung (2a) der Spannbacke (2) zurückzieht.

3. Spannfutter nach Anspruch 1 und 2, dadurch gekennzeichnet, daß am Haltestift (4) eine die Eindrückbewegung des Riegelgliedes (7) begrenzende Anschlagfläche (4d) ausgebildet ist.

4. Spannfutter nach mindestens einem der Ansprüche 1 bis 3, dadurch gekennzeichnet, daß die Rückstellfeder (5) in Verlängerung des Haltestiftes (4) angeordnet ist.

5. Spannfutter nach den Ansprüchen 1 bis 4, dadurch gekennzeichnet, daß das Riegelglied (7) einstückig ausgebildet und vom Haltestift (4) durchdrungen ist, der mehrteilig ausgeführt ist.

6. Spannfutter nach mindestens einem der Ansprüche 1 bis 5, dadurch gekennzeichnet, daß das Stellglied (3) mit jeweils einer Steuerschräge (3a) für die einzelnen Ringelglieder (7) versehen ist.

7. Spannfutter nach mindestens einem der Ansprüche 1 bis 6, dadurch gekennzeichnet, daß bei einem axial verschiebbar im Futterkörper (1) geführten, für alle Spannbacken (2) gemeinsamen Stellglied (3) jedes Riegelglied (7) in Umfangsrichtung des Futterkörpers (1) seitlich neben und etwa parallel zur Spannbacke (2) angeordnet und unmittelbar auf der zylindrischen Mantelfläche des die Spannbacken (2) über Keilflächen antreibenden Futterkolbens (3) abgestützt ist.

8. Spannfutter nach Anspruch 7, dadurch gekennzeichnet, daß der Futterkolben (3) in einem außerhalb seines Arbeitshubes liegenden Bereich mit jeweils einer Vertiefung (3b) für die Riegelglieder (7) versehen ist.

## Revendications

1. Mandrin de serrage commandé mécaniquement comportant plusieurs mâchoires de serrage (2) pouvant être déplacées radialement dans un corps de mandrin (1), et qui peuvent être manoeuvrées par un vérin (3) pouvant être déplacé en direction axiale dans le corps de mandrin (1), ainsi que de sécurités de mâchoires qui comprennent chacune un goujon de blocage (4) s'engageant dans un évidement (2a) de la mâchoire de serrage (2), ce goujon pouvant être retiré de l'évidement (2a) à l'aide d'un élément de verrouillage (7) accroché sur lui par liaison de forme et pouvant être manoeuvré manuellement, chaque élément de verrouillage (7) étant, dans la zone de travail du vérin (3), supporté directement sur une surface du vérin (3) et pouvant, lorsque le vérin (3) est mis dans une position de désaccouplement, être enfoncé contre la force d'un ressort de rappel (5) dans un renfoncement (3b) du vérin (3) ou dans un espace libéré par le vérin (3), caractérisé en ce que le goujon de blocage (4) est, dans la zone de travail du vérin (3), transporté par liaison de forme par l'élément de verrouillage (7) dans sa position de retenue d'engagement dans l'évidement (2a) de la mâchoire de serrage (2) et, dans la position de désaccouplement du vérin (3), il peut être retiré à la main de l'évidement (2a) en actionnant l'élément de verrouillage (7).

2. Mandrin de serrage selon la revendication 1, caractérisé en ce que l'élément de verrouillage (7) traverse le goujon de blocage (4) par une partie médiane cylindrique (7a) à laquelle se raccordent des deux côtés des surfaces de commande de forme tronconique (7b, 7c), parmi lesquelles la surface (7c) située intérieurement en direction radiale maintient, dans la position de retenue, le goujon de blocage (4) par l'intermédiaire de surfaces conjuguées (4c), mécaniquement dans sa position d'extrémité avancée et parmi lesquels la surface (7b) située extérieurement en direction radiale retire, lorsqu'on actionne à la main l'élément de verrouillage (7), le goujon de blocage (4) de l'évidement (2a) de la mâchoire de serrage (2) par l'intermédiaire d'une surface conjuguée (4b) réalisée sous forme de surface inclinée.

3. Mandrin de serrage selon les revendications 1 et 2, caractérisé en ce que sur le goujon de blocage (4) est formée une surface de butée (4d) limitant le mouvement d'enfoncement de l'élément de réglage (7).

4. Mandrin de serrage selon au moins l'une des revendications 1 à 3, caractérisé en ce que le ressort de rappel (5) est disposé dans le prolongement du goujon de blocage (4).

5. Mandrin de serrage selon les revendications 1 à 4, caractérisé en ce que l'élément de verrouillage (7) est réalisé en une seule pièce et est traversé par le goujon de blocage (4) qui est réalisé en plusieurs pièces.

6. Mandrin de serrage selon au moins l'une des revendications 1 à 5, caractérisé en ce que le vérin (3) est muni d'un biseau de commande (3a) pour chacun das différents éléments de verrouillage (7).

7. Mandrin de serrage selon au moins l'une des revendications 1 à 6, caractérisé en ce qu'avec un vérin (3) commun à toutes les mâchoires de serrage (2) et guidé pour coulisser en direction axiale dans le corps de mandrin (I), chaque élément de verrouillage (7) est disposé latéralement à côté de la mâchoire de serrage (2) en se référant à la direction périphérique, de façon sensiblement parallèle à cette mâchoire, cet élément étant supporté directement sur la surface latérale cylindrique du vérin (3) qui commande les mâchoires de serrage (2) par des faces de coin.

8. Mandrin de serrage selon la revendication 7, caractérisé en ce que le vérin (3) est muni, dans une partie située à l'exterieur de sa course de taravail, d'un renfoncement (3b) pour chacun des éléments de verrouillage (7).

## Claims

1. Power chuck with several clamping jaws (2) radially movably guided in a chuck body (1), which jaws are operable by means of a setting member (3) movably guided in the chuck body (1), and with jaw locking devices, which in each case surround a positioning pin (4) engaging into a recess (2a) of the clamping jaw (2), which pin can be retracted out of the recess (2a) by means of a manually operable latch member (7) positively engaging it, where each latch member (7) is supported in the working area of the setting member (3) directly on a surface of the setting member (3), and is able, when the setting member (3) has been moved over to a disengaged position, to be pushed against the force of a return spring (5) into a groove (3b) in the setting member (3) or into a space vacated by the setting member (3), characterised in that the positioning pin (4) in the working area of the setting member (3) is positively forced by the latch member (7) into its latching position engaging into the recess (2a) of the clamping jaw (2), and in the disengaged position of the setting member (3) can be retracted manually from the recess (2a) by operation of the latch member (7).

2. Chuck according to claim 1, characterised in that the latch member (7) passes through the positioning pin (4) with a cylindrical mid-section (7a) with frustoconical guide surfaces (7b, 7c) adjoining which on both sides, the radially inwardly positioned one (7c) of which surfaces over correspondingly formed countersurfaces (4c), secures the positioning pin (4) positively in the latching position in its forward end position, and the radially outwardly positioned one (7b) of which surfaces retracts the positioning pin (4), by means of a manual operation of the latch member (7), out of the recess (2a) of the clamping jaw (2) over a countersurface (4b) formed as an inclined surface.

3. Chuck according to claim 1 and 2, characterised in that a stop face (4d) limiting the push-in movement of the latch member (7) is formed on the positioning pin (4).

4. Chuck according to at least one of claims 1 to 3, characterised in that the return spring (5) is disposed in an extension of the positioning pin (4).

5. Chuck according to the claims 1 to 4, characterised in that the latch member (7) is formed in one piece, and is pierced by the positioning pin (4), which is constructed of several parts.

6. Chuck according to at least one of claims 1 to 5, characterised in that the setting member (3) is provided with a respective control bevel (3a) for the individual latch members (7).

7. Chuck according to at least one of claims 1 to 6, characterised in that by means of a common setting member which is axially movably guided in the chuck body (1) and which is common to all clamping jaws, each latch member (7) is disposed in the peripheral direction of the chuck body (1) laterally close and substantially parallel to the clamping jaw (2) and is supported directly on the cylindrical outer surface of the chuck piston (3), driving the clamping jaws (2) over wedge surfaces.

8. Chuck according to claim 7, characterised in that the chuck piston (3) is provided in an area situated outside its work stroke with a respective groove (3b) for each of the latch members (7).

Fig. 1

Fig. 2